(19) Europäisches Patentamt
European Patent Office
Office européen des brevets

(11) **EP 3 732 638 B1**

(12) **FASCICULE DE BREVET EUROPEEN**

(45) Date de publication et mention
de la délivrance du brevet:
**24.09.2025 Bulletin 2025/39**

(21) Numéro de dépôt: **18845305.4**

(22) Date de dépôt: **28.12.2018**

(51) Classification Internationale des Brevets (IPC):
**G06Q 10/04** (2023.01)     **G06T 7/00** (2017.01)
**G06Q 50/26** (2024.01)     **G06Q 30/02** (2023.01)
**G06V 20/52** (2022.01)     **G06Q 30/0201** (2023.01)

(52) Classification Coopérative des Brevets (CPC):
**G06Q 10/04; G06Q 30/0201; G06Q 50/26;
G06V 20/53**

(86) Numéro de dépôt international:
**PCT/FR2018/053560**

(87) Numéro de publication internationale:
**WO 2019/130003 (04.07.2019 Gazette 2019/27)**

(54) **SYSTÈME ET PROCÉDÉ DE GESTION DE RASSEMBLEMENT DE MASSE**

SYSTEM UND VERFAHREN ZUR VERWALTUNG VON MASSENANSAMMLUNGEN

SYSTEM AND METHOD FOR MANAGING MASS GATHERINGS

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **31.12.2017 FR 1763428**

(43) Date de publication de la demande:
**04.11.2020 Bulletin 2020/45**

(73) Titulaire: **BULL SAS**
**78340 Les Clayes-sous-Bois (FR)**

(72) Inventeurs:
• **BENRACHI, Samia**
**92290 Châtenay-Malabry (FR)**
• **MOHIB, Taoufik**
**Riyadh - KSA (SA)**
• **WENSINK, Emmanuel**
**3006 Bern (CH)**

(74) Mandataire: **IPAZ**
**Bâtiment Platon**
**Parc Les Algorithmes**
**91190 Saint-Aubin (FR)**

(56) Documents cités:
WO-A1-2017/021853    US-A1- 2009 158 309
US-A1- 2016 315 682    US-A1- 2017 053 171

• **NAKHAEI ZEINAB ET AL: "Toward high level data fusion for conflict resolution", 2017 INTERNATIONAL CONFERENCE ON MACHINE LEARNING AND CYBERNETICS (ICMLC), IEEE, vol. 1, 9 July 2017 (2017-07-09), pages 91 - 97, XP033255714, ISBN: 978-1-5386-0406-9, [retrieved on 20171114], DOI: 10.1109/ ICMLC.2017.8107748**
• **SHAN YANG ET AL: "Crowd Density Estimation Based on ELM Learning Algorithm", JOURNAL OF SOFTWARE, vol. 8, no. 11, 1 November 2013 (2013-11-01), XP055491325, ISSN: 1796-217X, DOI: 10.4304/jsw.8.11.2839-2846**
• **SHILIANG PU ET AL: "Estimation of crowd density in surveillance scenes based on deep convolutional neural network", PROCEDIA COMPUTER SCIENCE, vol. 111, 1 January 2017 (2017-01-01), AMSTERDAM, NL, pages 154 - 159, XP055491322, ISSN: 1877-0509, DOI: 10.1016/ j.procs.2017.06.022**
• **MUHAMMAD WAQAR AZIZ ET AL: "Automated Solutions for Crowd Size Estimation", SOCIAL SCIENCE COMPUTER REVIEW., 11 September 2017 (2017-09-11), US, XP055491362, ISSN: 0894-4393, DOI: 10.1177/0894439317726510**

EP 3 732 638 B1

**(Cont. page suivante)**

- SHAO-YUN PAN ET AL: "An Improved Convolutional Neural Network on CrowdDensity Estimation", 21 November 2016 (2016-11-21), XP055491334, Retrieved from the Internet <URL:https://www.itm-conferences.org/articles/itmconf/pdf/2016/02/itmconf_ita2016_05009.pdf> [retrieved on 20180710]
- CONG ZHANG ET AL: "Cross-scene crowd counting via deep convolutional neural networks", 2015 IEEE CONFERENCE ON COMPUTER VISION AND PATTERN RECOGNITION (CVPR), IEEE, 7 June 2015 (2015-06-07), pages 833 - 841, XP032793494, DOI: 10.1109/CVPR.2015.7298684
- MARK MARSDEN ET AL: "ResnetCrowd: A Residual Deep Learning Architecture for Crowd Counting, Violent Behaviour Detection and Crowd Density Level Classification", ARXIV.ORG, CORNELL UNIVERSITY LIBRARY, 201 OLIN LIBRARY CORNELL UNIVERSITY ITHACA, NY 14853, 30 May 2017 (2017-05-30), XP080766658, DOI: 10.1109/AVSS.2017.8078482
- ANONYMOUS: "Small cell - Wikipedia", 19 November 2017 (2017-11-19), XP055565231, Retrieved from the Internet <URL:https://en.wikipedia.org/w/index.php?title=Small_cell&oldid=811170781> [retrieved on 20190306]
- MANEESHA V RAMESH ET AL: "A Novel Wireless Sensor Network Architecture for Crowd Disaster Mitigation", 2012 8TH INTERNATIONAL CONFERENCE ON WIRELESS COMMUNICATIONS, NETWORKING AND MOBILE COMPUTING (WICOM 2012) : SHANGHAI, CHINA, 21 - 23 SEPTEMBER 2012, IEEE, PISCATAWAY, NJ, 21 September 2012 (2012-09-21), pages 1 - 4, XP032342577, ISBN: 978-1-61284-684-2, DOI: 10.1109/WICOM.2012.6478356
- ANONYMOUS: "Data fusion - Wikipedia", 2 December 2017 (2017-12-02), XP055564961, Retrieved from the Internet <URL:https://en.wikipedia.org/w/index.php?title=Data_fusion&oldid=813225308> [retrieved on 20190306]
- DR SAEED ET AL: "A Hybrid Intelligence of Harmony Search Algorithm and Neural Network for Crowd Density Estimation", INTERNATIONAL JOURNAL OF COMPUTER SCIENCE AND INFORMATION TECHNOLOGY & SECURITY (IJCSITS), vol. 7, 1 July 2017 (2017-07-01), pages 2249 - 9555, XP055491342

## Description

L'invention concerne le domaine de la gestion de rassemblement de masse, et plus particulièrement un système de gestion pouvant être utilisé pour quantifier, prévoir, et suivre les mouvements de personnes et leur comportement lors d'un rassemblement de masse. L'invention concerne un procédé de gestion de rassemblement de masse capable en outre d'exploiter les données quantitatives générées pour proposer des solutions de gestion de foules permettant d'assurer la sécurité des participants au rassemblement de masse et par exemple de réduire le risque d'accidents associés aux mouvements de foules.

### [Art antérieur]

Les grands rassemblements, appelés encore évènements de masse ou rassemblement de masse, sont caractérisés par un grand nombre de personnes assistant ou participant à un évènement commun, par exemple à un pèlerinage, une compétition sportive ou un concert. Avec l'augmentation de la population, de la communication et la démocratisation des transports sur de longues distances, ces grands rassemblements sont de plus en plus fréquents et concernent des personnes de plus en plus nombreuses et diverses.

Les événements susceptibles de rassembler le plus grand nombre de personnes sont souvent des pèlerinages tels que le Hadj qui est le plus grand rassemblement populationnel annuel dans le monde, la Kumbh Mela qui est le plus grand rassemblement d'hindous dans le monde ou encore des messes du pape rassemblant souvent plusieurs millions de personnes. Ainsi, pour l'année 2011, le département central de statistiques et d'information du Royaume d'Arabie Saoudite a recensé près de 3 millions de pèlerins pour le Hajj. Le pèlerinage du Hajj rassemble plusieurs millions de personnes tous les ans sur seulement quelques jours. Malgré un contrôle exercé par les autorités du Hajj, le nombre de pèlerins sur la période du Hajj dépasse 2,5 millions chaque année. En hausse, il est probable que ce nombre atteigne 10 millions de visiteurs par an dans quelques années. Outre les pèlerinages, les évènements susceptibles de rassembler une foule conséquente sont par exemple les évènements sportifs (e.g. coupe du monde ou jeux olympiques) ou les évènements culturels (e.g. Exposition Universelle). Par exemple, pour les jeux olympiques de 2024 en France, le nombre de spectateurs attendus en moyenne durant la quinzaine olympique est estimé à plus de trois millions dont 500 000 visiteurs étrangers.

Or, de tels rassemblements présentent des probabilités accrues de risques notamment à cause des possibles mouvements de foule souvent associés à une congestion de la foule. En effet, la foule peut être statique ou mouvante et, sous l'effet de la masse collective, elle peut changer d'attitude très rapidement entraînant alors des phénomènes appelés mouvements de foule. En outre, les rassemblements de masse compliquent l'accès et l'intervention des secours. Au final, les rassemblements de masse augmentent les chances qu'un événement dangereux se produise. Ces accidents surviennent en raison notamment d'une absence de données et de statistiques sur le nombre de participants et leur répartition, d'une absence d'une estimation fiable stricte des déplacements, d'une gestion insuffisante de l'espace disponible et du comportement imprévisible de la foule. Au cours des dix dernières années, plusieurs milliers personnes sont mortes dans des catastrophes associées à une mauvaise gestion de la foule.

Ainsi, les autorités en charge de la surveillance de grand rassemblement, chargées de gérer et de contrôler la foule dans les lieux publics sont confrontées à une tâche difficile puisqu'une seule erreur dans la gestion des foules peut mener à des bousculades et à d'énormes pertes de vie. En particulier, le contrôle des foules est devenu un problème majeur lors de rassemblement de masse avec de nombreux participants qui peuvent mourir dans des mouvements de foule, sources d'accidents notamment dans les zones congestionnées.

Généralement, les techniques les plus utilisées pour la gestion des foules sont des techniques associées à des contrôles d'entrée et de sortie ainsi que la création de canaux temporaires capables de contrôler la foule tel que décrit dans le document WO2017021853. Néanmoins, un tel contrôle n'est pas adapté à tous les rassemblements et certains rassemblements nécessitent de conserver une nécessaire liberté de mouvements ou de circulation. En outre, l'existence de points de contrôle ponctuels ne permet pas une gestion suffisance de la foule car les mouvements de foule peuvent intervenir entre les points de contrôle. De plus, les points de contrôles peuvent eux-mêmes devenir des points de congestion.

D'autres méthodes de suivi et de gestion de foules ont été proposées. Par exemple, une méthode basée sur l'utilisation d'une étiquette RFID passive pour l'identification des pèlerins dans les zones saintes pendant le Hajj a été proposée. Dans le cadre de cette technologie, sur présentation de l'étiquette à un lecteur portatif, toutes les informations relatives au pèlerin en possession de l'étiquette seront affichées sur l'écran du lecteur. Néanmoins, cette technologie présente des défaillances de détection notamment dans le cadre d'une densité importante de personnes ou bien lorsque lesdites personnes sont dans un véhicule. Ce principe a notamment été détaillé dans le document US20110080262 qui décrit un système pour localiser un sujet spécifique parmi un certain nombre de sujets possibles ayant une étiquette RFID fournissant à un lecteur RFID un code d'identification unique. Une base de données contenant des informations sur les abonnés, comprenant une liste de codes d'identification RFID associés aux sujets d'intérêt, est incluse dans le système. Il a également été proposé un système de suivi d'emplacement en temps réel basé sur une technologie hybride Bluetooth / RFID dans le document US20020126013 ou encore un réseau de capteurs sans fil pour un système de suivi et de surveillance de pèlerins utilisant des modules GPS et une technologie RF.

Malgré ces technologies, il existe une difficulté à quantifier, prévoir, et suivre les mouvements de personnes et leur comportement lors de rassemblement de masse. Par exemple, il existe un manque d'informations fiables sur le nombre de participants, leurs mouvements et leur comportement pendant les rassemblements de masse, ce qui rend difficile la prise de décisions pour les autorités compétentes. Or, cette indécision peut créer de fortes congestions par exemple dues à la convergence de grands groupes de pèlerins notamment au Haram pendant la période du Hajj.

Il existe donc un besoin pour un système ou un procédé permettant d'améliorer la gestion de la foule au cours de rassemblements de masse. Une meilleure gestion de la foule nécessite au préalable une meilleure analyse de sa répartition sur le lieu du rassemblement. En outre, il existe aussi un besoin pour un système ou un procédé permettant d'assurer un haut niveau de confort pour les participants avec par exemple une optimisation dynamique de l'usage des ressources de façon à assurer la sécurité et l'hygiène lors du rassemblement de masse.

### [Problème technique]

L'invention a donc pour but de remédier aux inconvénients de l'art antérieur. En particulier, l'invention a pour but de proposer un système de gestion de rassemblement de masse, ledit système permettant de compter de façon plus précise le nombre de participants audit rassemblement et plus particulièrement d'accéder à des données de répartition sur l'emplacement géographique. L'invention à également pour but de proposer une gestion dynamique du rassemblement de masse en fonction des données de répartition des participants générées.

L'invention a en outre pour but de proposer un procédé de gestion de rassemblement de masse, accueillant au moins plusieurs milliers de personnes, sur un emplacement géographique de rassemblement, ledit procédé pouvant être utilisé pour fournir des données quantitatives fiables et des services de gestion de foules capables de réduire les risques associés aux mouvements de foule et améliorer le confort des participants.

### [Brève description de l'invention]

A cet effet, l'invention porte sur un système de gestion de rassemblement de masse sur un emplacement géographique selon la revendication 1.

Il existe un fort taux d'erreur dans l'estimation de la répartition des participants à un rassemblement de masse lorsque la répartition est estimée avec les méthodes automatisées connues de l'art antérieur (caméra, RFID...). Le système selon l'invention permet d'obtenir une donnée de répartition corrigée bien plus proche des valeurs réelles de répartition. Ainsi, l'invention présente l'avantage de permettre la mise en place d'actions de gestion de rassemblement de masse basées sur des valeurs de répartition correctes. Ainsi, le système selon l'invention permet notamment de calculer en temps-réel, et de prédire la densité des personnes (e.g. pèlerins) en fonction de l'emplacement considéré de façon à, si nécessaire, ouvrir des accès de secours, contenir de nouveaux flux de foules et ainsi prévenir des risques associés aux mouvements de foule (collisions).

Un tel système est particulièrement utile dans le cadre de la gestion de pèlerinages tels que les petits et le grand pèlerinage à La Mecque, notamment via une meilleure gestion des mouvements de foule lors des déplacements. Elle permet par exemple de faciliter la canalisation et la mise en mouvement contrôlée de foule et réduit la probabilité d'accidents causés par d'éventuelles congestions.

**Selon d'autres caractéristiques optionnelles du système :**

- les capteurs réseau sont aptes à se connecter à des dispositifs électroniques *via* au moins un protocole de communication sélectionné parmi : Wifi, Bluetooth et GSM. En effet, ces protocoles sont largement répandus et compatibles avec la plupart des dispositifs électroniques pouvant être portés par des participants. Ainsi, un système associé à de tels capteurs pourrait acquérir et interpréter les données générées par des dispositifs électroniques communicants portés par des participants tels que des téléphones portables, tablettes, montres connectées ou encore des bracelets connectés.

- le modèle de correction est sélectionné parmi les modèles suivants : FP-Growth, Apriori, partitionnement hiérarchique, partitionnement en k-moyenne, classification par réseaux de neurones, arbres de décision et régression logique. Ces modèles particuliers permettent la production de données de répartition les plus proches de la réalité.

- le module de prétraitement est par exemple au niveau de la plateforme analytique.

- il comporte un module de mémorisation de données apte à enregistrer les données de répartition acquises et les données de répartition corrigées. Le module de mémorisation est en outre apte à gérer une historisation desdites données. Un tel module est avantageusement configuré pour conserver des données antérieures, organisées et accessibles sur requêtes. Cela permet d'une part l'établissement de statistiques sur le rassemblement de masse et d'autre part la mise en œuvre de modèle d'apprentissage sur la base de ces données pour une amélioration constante des performances de la plateforme.

Ainsi, outre une gestion dynamique du rassemblement se basant sur des données précises de répartitions des participants mise à jour en temps réel ou quasiment en temps réel, le système selon l'invention permet d'établir des données prédictives en fonction des données mesurées en temps réel et des données antérieures. Ainsi, le système n'est plus seulement en mesure de réagir et de s'adapter rapidement à une situation à risque mais il peut l'anticiper et éviter sa survenue.

- le module d'apprentissage est configuré pour analyser les données de répartition corrigées de façon à générer des données prédictives sélectionnées parmi :

  ◦ des seuils critiques de répartition, de préférence par zone, au-delà desquels des actions pourront être engagées de façon à réduire le risque de mouvement de foule,
  ◦ des données de répartition prédites, en fonction du temps, de participants audit rassemblement,
  ◦ des motifs critiques de répartition, de préférence entre différentes zones, en présence desquels des actions pourront être engagées de façon à réduire le risque de mouvement de foule.

- La plateforme analytique comporte un module d'analyse apte à comparer, de préférence en temps réel, les données de répartition corrigée sur ledit emplacement géographique de rassemblement à des seuils critiques prédéterminés de répartition et à générer une alerte en fonction du résultat de la comparaison. Cela permet au système d'identifier des risques potentiels et par exemple des goulots d'étranglement.

- le module de traitement de données est apte à générer des données de répartition sélectionnées parmi :

  ◦ la quantité totale de participants sur l'emplacement géographique ou sur une partie de l'emplacement géographique,
  ◦ la densité de participants sur l'emplacement géographique ou sur une partie de l'emplacement géographique, et
  ◦ le nombre de personnes entrées et sorties de l'emplacement géographique ou d'une partie de l'emplacement géographique.

- il comporte en outre au moins un dispositif de contrôle d'accès configuré pour contrôler les accès entre différentes zones de l'emplacement géographique. Cela est particulièrement utile en cas de risque de mouvement de foule.

- le dispositif de contrôle d'entrée est couplé avec des dispositifs électroniques individuels, se présentant de préférence sous la forme de bracelets électroniques, lesdits dispositifs électroniques individuels comportant un module de stockage individuel de données apte à stocker des données personnelles sur une personne et un module de communication apte à communiquer avec un dispositif de contrôle d'accès.

- le système comporte en outre un module de communication configuré pour recevoir et transmettre des informations à des systèmes distants tels que des capteurs, des tablettes, des téléphones, des ordinateurs ou des serveurs.

- le système comprend en outre un module de supervision configuré pour afficher au moins une information sur les données de répartitions réelles ou prédites des participants au rassemblement de masse.

- le système comporte, ou est associé à, entre 10 et 2000 capteurs réseau, la pluralité de capteurs réseau correspondant à une densité de capteurs réseau comprise entre 1 et 10 par 10 000 m$^2$.

L'invention porte en outre sur un procédé de gestion de rassemblement de masse sur un emplacement géographique selon la revendication 13.
D'autres avantages et caractéristiques de l'invention apparaitront à la lecture de la description suivante donnée à titre d'exemple illustratif et non limitatif, en référence aux Figures annexées qui représentent :

• Figure 1, une représentation schématique du système de gestion de rassemblement de masse selon l'invention, les éléments en pointillés sont facultatifs.

• Figure 2, une représentation schématique du procédé de gestion de rassemblement de masse selon l'invention,

• Figure 3, une représentation schématique d'une étape de construction du modèle de correction par apprentissage selon un mode de réalisation de l'invention,

• Figure 4, une représentation schématique d'une étape de calcul d'une donnée de répartition corrigée selon un mode de réalisation de l'invention,

• Figure 5, une représentation schématique d'une étape d'analyse des données corrigées selon un mode de réalisation de l'invention,

- Figure 6, une représentation schématique d'une étape de construction et de mise à jour d'un modèle de prédiction de répartition de participant et de mouvement de foule selon un mode de réalisation de l'invention.

**[Description de l'invention]**

Dans la suite de la description, on entend par « emplacement géographique », un lieu pouvant être définie par sa superficie, être constitué par des zones en extérieures et/ou des zones en intérieur.

Le terme « rassemblement de masse » selon l'invention correspond à un événement planifié ou spontané, de préférence planifié, qui va attirer un nombre de participants susceptible de solliciter considérablement les ressources en matière de planification et d'action des administrateurs ou du pays hôte. Les Jeux olympiques, le Hadj et d'autres événements sportifs, religieux ou culturels majeurs en sont des exemples.

Le terme « répartition » se réfère, selon l'invention, à une quantité ou à un mouvement de personnes. La quantité peut être exprimée selon plusieurs dimensions comme par une densité (e.g. personne/m²), un nombre total (e.g. en centaine de personne), un pourcentage (e.g. nombre de personne / capacité de la zone). Le mouvement correspond à une quantité en entrée et en sortie de l'emplacement géographique ou d'une partie de l'emplacement géographique. Ainsi, la « donnée de répartition » selon l'invention correspond à une ou plusieurs valeurs.

Par « paramètre », on entend au sens de l'invention une valeur obtenue par transformation de données brutes et pouvant être ensuite utilisée au sein d'un modèle. Cela s'applique notamment à la transformation d'une série d'image d'une vidéo ou à la transformation d'une série de valeurs obtenues via un capteur réseau.

Par « seuil critique de répartition », on entend au sens de l'invention une valeur prédéterminée de répartition de participants ou de mesure de capteur au-delà de laquelle il existe un risque important de mouvement de foule.

Par « modèle » ou « règle » ou « algorithme » il faut comprendre au sens de l'invention une suite finie d'opérations ou d'instructions permettant de calculer une valeur par l'intermédiaire d'un classement ou d'un partitionnement des données au sein de groupes préalablement définis Y et d'attribuer un score ou de hiérarchiser une ou plusieurs données au sein d'un classement. La mise en œuvre de cette suite finie d'opérations permet par exemple d'attribuer une étiquette Y à une observation décrite par un ensemble de caractéristiques ou paramètres X grâce par exemple à la mise en œuvre d'une fonction f susceptible, de reproduire Y ayant observé X.

$$Y = f(X) + e$$

où e symbolise le bruit ou erreur de mesure.

Par « méthode d'apprentissage supervisé », on entend au sens de l'invention un procédé permettant de définir une fonction f à partir d'une base de n observations étiquetées $(X_{1...n}, Y_{1...n})$ où $Y = f(X) + e$. Par « méthode d'apprentissage non supervisée », une méthode visant à hiérarchiser les données ou à diviser un ensemble de données en différents groupes homogènes, les groupes homogènes partageant des caractéristiques communes et cela sans que les observations soient étiquetées.

Par « entretien » ou « action d'entretien », on entend au sens de l'invention une activité visant à réparer, recharger, nettoyer ou remplacer une installation. Par « installation », on entend au sens de l'invention un bâtiment, un local, un logement mais également un équipement (e.g. distributeur d'eau, meubles). On entend par « ressources d'entretien », des personnes, aussi appelées « agent d'entretien » qualifiées pour réaliser des actions d'entretien ou des dispositifs pouvant être nécessaire à la réalisation des actions d'entretien.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

Dans la suite de la description, les mêmes références sont utilisées pour désigner les mêmes éléments.

L'invention se rapporte à un système ou à un procédé de gestion de rassemblement de masse. Les événements susceptibles de rassembler le plus grand nombre de personnes sont souvent des pèlerinages, des évènements sportifs, des manifestations ou des évènements culturels. La présente invention, bien qu'applicable à de nombreux rassemblement de masse sera illustrée plus particulièrement dans un contexte de pèlerinage à La Mecque, par exemple lors du grand pèlerinage ou du petit pèlerinage. En effet, le pèlerinage à La Mecque représente environ cinq millions de visiteurs chaque année dans les villes de La Mecque et de Médine en Arabie Saoudite. Ces visiteurs se retrouvent en particulier lors du rituel annuel du Hajj qui est effectué sur un nombre précis de jours du mois de Dhul-Hijja de chaque année lunaire, plus particulièrement pendant les 12 premiers jours. En 2017, le premier jour du mois Dhul-Hijja de l'année lunaire 1437 était le 23 août 2017.

Le pèlerinage du Hajj s'étend sur un emplacement géographique correspondant à La Mecque soit plus de 1000 km$^2$. Lors de ce pèlerinage, les participants au Hajj, aussi appelés Hadjis vont prier cinq fois par jours dans les mêmes lieux de rassemblement et vont procéder au actions de cultes comme expliquées. Ils auront par exemple à faire sept rondes autour de la Kaaba, faire sept fois la marche entre Safâ et Marwah, boire à la source Zamzam puis se rendre au lieu-dit « Mina » à 4 km de La Mecque et faire les prières de l'après-midi (asr), du soir (maghreb et icha) et du matin (fajr). Ils devront également avancer vers la montagne Arafat et y faire la prière de midi et de l'après-midi puis aller vers « Muzdalifah » pour faire les prières du soir. Le lendemain, le pèlerin revient vers Mîna pour y réaliser les rites prescrits soit un parcours d'environ 17km (allée et retour) En outre, les pèlerins visitent généralement la mosquée du Prophète Mohamed (PSSL), Al-Masjid an-Nabawī,, à Médine. Ainsi, avec plusieurs millions de pèlerins parcourant ce territoire sur une période très courte et visitant plusieurs installations, les administrations en charge de la gestion de l'entretien des installations de La Mecque sont soumises à une forte pression. Ainsi, le pèlerinage du Hadj accueille des millions de pèlerins réalisant les mêmes actions au même moment entrainant alors une forte densité de pèlerins et toutes ces actions sont réparties sur seulement quelques jours sur une zone de plusieurs kilomètres carrés. En cela, la gestion d'un tel évènement représente un enjeu exceptionnel notamment en ce qui concerne la gestion des participants au sein de l'emplacement géographique concerné. En effet, il faut d'une part assurer la sécurité des participants en prédisant et limitant les mouvements antagonistes de foules mais assurer leur confort. Cela est possible en mettant en place une gestion dynamique du rassemblement se basant sur des données précises de répartitions des participants mise à jours en temps réel ou quasiment en temps réel. Ainsi, les actions destinées à la sécurité et au confort du participant (maintien de la propreté des installations et de la disponibilité des équipements) sont parfaitement adaptées à la situation.

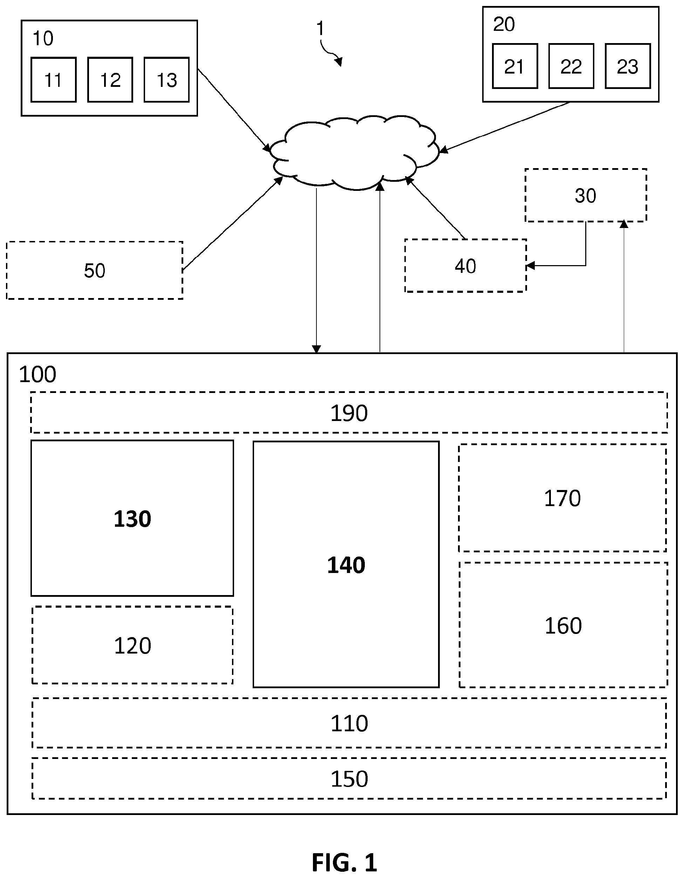

Comme présenté à la **Figure 1,** l'invention porte selon un **premier aspect** sur un **système 1 de gestion d'un rassemblement de masse** pouvant, de préférence, accueillir au moins plusieurs milliers de personnes, de préférence plus de 100 000 personnes, de façon plus préférée plus d'un million de personnes.

L'emplacement géographique dans le cadre de l'invention peut être considéré dans son ensemble mais également divisé en plusieurs parties, espaces ou zones. En effet, dans le cadre du suivie de la répartition, les données de répartition seront de façon préférée traitées zones par zones avec avantageusement un suivi des mouvements entre les zones.

En outre, l'emplacement géographique comporte une pluralité d'installations. Les installations peuvent par exemple sont sélectionnées parmi : des lieux de culte, des locaux sanitaires, des logements, des parcs, mais également parmi les équipements présents au sein de ces bâtiments ou espaces tels que par exemple des bancs, des tables, des distributeurs (e.g. d'eau) et des tapis. Dans le cadre du pèlerinage de La Mecque, ces installations sont par exemple des lieux ou des structures telles que la Kaaba, Safâ, Marwah, la source Zamzam, le lieu-dit « Mina », Muzdalifah », la mosquée du Prophète Mohamed (PSSL), Al-Masjid Al-Nabawi, à Médine ou encore des équipements tels que des tapis, distributeurs de sac en plastique pour les chaussures ou distributeurs d'eau. L'emplacement géographique comporte au moins deux installations dont l'entretien est à gérer, par exemple au moins dix installations, de façon préférée au moins vingt installations, de façon plus préférée au moins cinquante installations, et de façon encore plus préférée au moins cent installations. Ainsi, la mise en oeuvre d'un procédé de gestion d'entretien dynamique dans un tel contexte n'est pas comparable aux problématiques classiques d'activités ménagères.

Comme présenté en figure 1, le système 1 selon l'invention comporte une plateforme 100 analytique ou plateforme informatique analytique. Cette plateforme 100 analytique est plus particulièrement en charge du traitement des informations, de la planification, de la génération d'instruction et du suivi de l'entretien.

Pour cela, cette plateforme 100 analytique est associée une pluralité de dispositifs d'acquisition d'images et de capteurs réseau. Ces dispositifs d'acquisition d'images et ces capteurs réseau sont répartis sur l'emplacement géographique de façon à pouvoir fournir des données représentatives de la situation sur l'emplacement géographique.

**La plateforme 100 analytique est associée à une pluralité de dispositifs d'acquisition d'images 10** mais le système peut également comprendre ladite pluralité de dispositifs d'acquisition d'images.

Les dispositifs d'acquisition d'images 11, 12, 13, 14 sont tous les dispositifs capables d'enregistrer et de transmettre une image. Par exemple, les dispositifs d'acquisition d'images 11, 12, 13, 14 sont sélectionnés parmi : des appareils photographiques, des caméras pour le visible, des caméras thermiques infrarouge, des caméras bi-spectrales, des caméras 3D et/ou des caméras embarquées sur des drones. Avantageusement, les dispositifs d'acquisition d'images 10 comportent des caméras 3D, capables de scruter une zone à 360.

La pluralité de dispositifs d'acquisition d'images 10 correspond avantageusement à une quantité suffisante pour permettre l'acquisition d'une donnée de répartition fiable. Par exemple, le système 1 peut comporter ou être associé à entre 10 et 2000 dispositifs d'acquisition d'images 11, 12, 13, 14. Avantageusement, la pluralité de dispositifs d'acquisition d'images 10 correspond à une densité de dispositifs d'acquisition d'images 11, 12, 13, 14 par 100 m$^2$ comprise entre 1 et 100 dispositifs d'acquisition d'images

Ainsi, la plateforme 100 analytique est associée à une **pluralité de capteurs réseau 20** mais le système peut également comprendre ladite pluralité de capteurs réseau.

Les capteurs réseau 20 sont tous dispositifs capables d'enregistrer et de transmettre une information sur une donnée réseau. Par exemple, les capteurs réseau 20 sont aptes à se connecter à des dispositifs via au moins un protocole de communication sélectionné parmi : Wifi, Bluetooth et GSM. De façon préférée, les capteurs réseau 20 sont aptes à se connecter à des dispositifs communicants via au moins les protocoles de communication : Wifi, Bluetooth et GSM. En effet, de nos jours, la majorité des téléphones, des ordinateurs portables et des appareils électroniques portables utilisent la communication sans fil, en particulier Bluetooth et Wi-Fi.

Ainsi, les capteurs réseau sont avantageusement aptes à acquérir un ensemble d'informations sur les dispositifs électroniques communicants se trouvant à leur portée. Les informations acquises peuvent par exemple correspondre à : une donnée d'adresse MAC (« Media Access Control » terminologie anglo-saxonne), à une donnée d'IMEI (« International Mobile Equipment Identity », terminologie anglo-saxonne), à un identifiant de fournisseur d'accès au réseau GSM (« Global System for Mobile Communications », terminologie anglo-saxonne), la base de réception CID (Cell ID en terminologie anglo-saxonne) ou encore la puissance du signal.

De façon préférée ces données sont anonymisées et sont identifiées par un identifiant unique pouvant par exemple être une donnée d'adresse MAC du dispositif électronique communicant ou d'identifiant IMEI.

La pluralité de capteurs réseau 20 correspond avantageusement à une quantité suffisante pour permettre l'acquisition d'une donnée de répartition fiable. Par exemple, le système 1 peut comporter, ou être associé à,

entre 10 et 2000 capteurs réseau 20, de préférence entre 15 et 200 capteurs réseau. Avantageusement, la pluralité de capteurs réseau correspond à une densité capteurs réseau 20 par 10 000 m$^2$ comprise entre 1 et 10.

Comme présenté dans la figure 1, la plateforme 100 analytique comporte un **module d'acquisition 130 de données.** Ce module d'acquisition 130 de données est avantageusement apte à acquérir, ou charger, des données de répartition des participants générées à partir de données provenant de la pluralité de dispositifs d'acquisition d'images 10 et à acquérir, ou charger, des données de répartition des participants générées à partir de données provenant de la pluralité de capteurs réseau 20.

Comme présenté dans la figure 1, la plateforme 100 analytique comporte un **module de traitement 140 de données.** A partir des données de répartition acquises par le module d'acquisition 130, ce module de traitement 140 de données est avantageusement apte à calculer, sur la base d'un modèle de correction par apprentissage supervisé ou non supervisé, une donnée de répartition corrigée des participants audit rassemblement.

Le modèle de correction est par exemple sélectionné parmi les modèles suivants : FP-Growth, Apriori, partitionnement hiérarchique, partitionnement en k-moyenne, classification par réseaux de neurones, arbres de décision et régression logique.

De façon préférée, la donnée de répartition corrigée des participants correspond à au moins une donnée sélectionnée parmi les données suivantes :

- une donnée relative à la quantité de participants, telle que la quantité totale ou la densité de personnes présentes sur l'emplacement géographique ou sur une partie de l'emplacement géographique. Cette donnée donne une information sur le volume de participants.

- une donnée relative aux mouvements de participants, telle que le nombre de personnes entrées et sorties de l'emplacement géographique ou d'une partie de l'emplacement géographique. Cette donnée donne une information sur le flux de participants.

Le système 1, ou plus particulièrement comme présenté en figure 1 la plateforme 100 analytique, peut également comporter **un module de prétraitement 120.** Ce module de prétraitement 120 peut être configuré pour générer des données de répartition des participants à partir de données brutes provenant de la pluralité de capteurs réseau et/ou de la pluralité de dispositifs d'acquisition d'images.

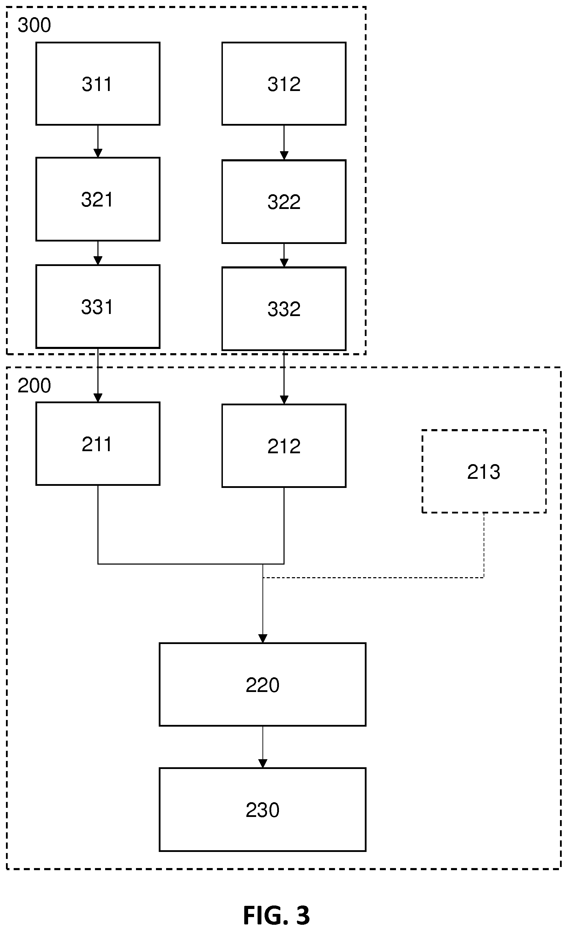

La figure 3 présente par exemple une étape 300 de prétraitement de données brutes de la pluralité de dispositifs d'acquisition d'images ou de capteurs réseau 20 pour la génération de données de répartition des participants au rassemblement. Dans ce mode de réalisation, le prétraitement débute par une étape d'acquisition de données brutes d'images 311 et/ou d'acquisition de données brutes de communication réseau 312.

Ces données brutes sont alors traitées au cours d'étapes 321 et 322 permettant, à partir de paramètre d'images ou de réseau, de généré une ou deux données de répartition de participant. Ces données de répartition générées peuvent ensuite être enregistrées sur une mémoire lors d'étapes 331 et 332.

Ainsi, la plateforme 100 analytique, peut également comporter un **module de mémorisation 150 de données.**

Ce module est plus particulièrement apte à enregistrer les données de répartition acquises, les données de répartition corrigées et les données de répartition prédites. Ce module peut également être utilisé plus largement pour toutes les données acquises et générée par la plateforme analytique. En outre, ce module est avantageusement configuré pour créer et gérer une historisation desdites données.

Pour cela, le module de mémorisation 150 peut comprendre une mémoire transitoire et/ou une mémoire non transitoire. La mémoire non transitoire peut être un support tel qu'un CDrom, une carte mémoire, ou un disque dur par exemple hébergé par un serveur distant. Le module de mémorisation 150 est en outre apte à gérer une historisation des données reçues ou générées par la plateforme 100 analytique. Avantageusement, le module de mémorisation 150 présente une architecture de type LAMBDA, KAPPA ou Architecture SMACK.

Comme cela a été dit, outre une gestion dynamique du rassemblement se basant sur des données précises de répartitions des participants mise à jours en temps réel lui permettant de réagir et de s'adapter rapidement à une situation à risque, le système selon l'invention peut également anticiper une situation à risque et éviter sa survenue. Pour cela, la plateforme 100 analytique, peut également comporter **un module d'apprentissage 110.**

En outre, le module d'apprentissage 110 est par exemple configuré pour créer et mettre à jour un **modèle de génération des données de répartition** des participants à partir de données brutes provenant de la pluralité de capteurs réseau et/ou de la pluralité de dispositifs d'acquisition d'images. Ce module 110 peut aussi être configuré pour créer et mettre à jour le **modèle de correction** utilisé pour calculer la donnée de répartition corrigée. Ce module 110 peut également être configuré pour créer et mettre à jour le modèle **d'interprétation des données de répartition corrigées** qui est par exemple utilisé pour calculer une probabilité de mouvement de foule, de préférence par zone en fonction des données de répartitions ou encore un **modèle de prédiction de répartition de participant** à partir de données de répartition corrigées.

Le module d'apprentissage 110 est apte à mettre en oeuvre des algorithmes basés sur des méthodes d'apprentissage supervisé ou non supervisé. Ainsi, avantageusement, la plateforme 100 analytique est configurée pour mettre en oeuvre les données d'entrées dans un ou plusieurs algorithmes, de préférence préalablement calibrés. Ces algorithmes sont par exemple sélectionnés parmi un algorithme de modèle de génération des données de répartition, un algorithme de modèle de correction, un algorithme de modèle d'interprétation des données de répartition corrigées. En outre, ces algorithmes peuvent présenter différentes versions en fonction du temps d'une période du rassemblement. Par exemple, dans le cadre du pèlerinage, trois périodes peuvent être prises en compte : le Hadj ou grand pèlerinage, le petit pèlerinage et le reste de l'année. Cela permet d'affiner les prédictions issues des modèles. Ces algorithmes peuvent avoir été construit à partir de différents modèles d'apprentissage, notamment de partitionnement, supervisés ou non supervisés. Un algorithme d'apprentissage non supervisé peut par exemple être sélectionné parmi un modèle de mélange Gaussien non supervisé, une classification ascendante hiérarchique (Hierarchical clustering Agglomerative en terminologie Anglo-Saxonne), une classification descendante hiérarchique (Hierarchical clustering divisive en terminologie Anglo-Saxonne). Alternativement, l'algorithme repose sur un modèle d'apprentissage statistique supervisé configuré de façon à minimiser un risque de la règle d'ordonnancement et ainsi permettant d'obtenir des règles de prédiction plus performantes. Dans ce cas, les étapes de calcul de détermination et d'estimations peuvent être basées sur un modèle, entrainé sur un jeu de données et configuré pour prédire une étiquette. Par exemple, aux fins de la calibration, il est possible d'utiliser un jeu de données représentatif d'une situation dont l'étiquette est connue, par exemple le nombre de participant dans une zone compté manuellement. Le jeu de donnée peut également comprendre des étiquettes multiples. L'algorithme peut être issu de l'utilisation d'un modèle d'apprentissage statistique supervisé sélectionné par exemple parmi les méthodes à noyau (e.g. Séparateurs à Vaste Marge - Support Vector Machines SVM, Kernel Ridge Regression) décrites par exemple dans Burges, 1998 (Data Mining and Knowledge Discovery. A Tutorial on Support Vector Machines for Pattern Recognition), les méthodes d'ensembles (e.g. arbres de décision) décrites par exemple dans Brieman, 2001 (Machine Learning. Random Forests), FP-Growth, Apriori, partitionnement hiérarchique, partitionnement en k-moyenne, arbres de décision, régression logique ou les réseaux de neurones décrits par exemple dans Rosenblatt, 1958 (The perceptron: a probabilistic model for information storage and organization in the brain).

Comme cela est présenté en figure 1, la plateforme 100 analytique, peut également comporter **un module d'analyse 160.**

Ce module d'analyse 160 est notamment apte à comparer, de préférence en temps réel, les données de répartition corrigée sur ledit emplacement géographique de rassemblement à des seuils critiques prédéterminés de répartition et à générer une alerte en fonction du résultat de la comparaison. Cela permet au système d'identifier des risques potentiels et par exemple des goulots d'étranglement.

Le module d'analyse 160 est aussi avantageusement configuré pour générer, de préférence en temps réel, des motifs de mouvement de foule et pour les comparer à des motifs préenregistrés. Cela permet d'identifier des risques potentiels malgré l'absence de dépassement de seuils critiques.

La plateforme 100 analytique peut avantageusement comporter **un module de d'analyse 160** configuré pour générer des fichiers comportant des données analysées, de préférence en fonction du temps, sélectionnées parmi :

- la répartition réelle et/ou prédite des participants audit rassemblement, c'est à dire la quantité totale de participants sur l'emplacement géographique ou sur une partie de l'emplacement géographique, la densité de participants sur l'emplacement géographique ou sur une partie de l'emplacement géographique, et/ou le nombre de personnes entrées et sorties de l'emplacement géographique ou d'une partie de l'emplacement géographique ;
- Les événements critiques réels et/ou prédits, tels que des mouvements de foules ;
- Les besoins médicaux réels et/ou prédits ;
- Les besoins en sécurité réels et/ou prédits ; ou encore
- Les besoins logistiques réels et/ou prédits.

Ces fichiers sont de façon préférée générés à partir de données historisées. Ces fichiers peuvent ensuite être traités par des applications de représentation de façon à mettre en exergue les informations pertinentes (format de type « heat maps ». Ainsi, le module d'analyse est en mesure de générer des données statistiques permettant d'optimiser les actions d'entretien. Il permet également de réduire le gaspillage des ressources.

Le module d'analyse est en outre apte, en cas d'alerte générée, à extraire une portion d'images provenant des dispositifs d'acquisition d'image 10 et à les transmettre à un module de supervision 170. Cela peut être nécessaire pour valider ou non le risque ou la survenue d'un mouvement de foule ou de tout autre incident.

Ainsi, la plateforme 100 analytique peut comporter **un module de supervision 170** comprenant un dispositif d'affichage configuré pour afficher par exemple au moins une information sur les données de répartitions réelles ou prédites des participant au rassemblement de masse, des données provenant des dispositif d'acquisition d'image 10.

Les données de répartition prédites sont de préférence prédites en fonction du temps. Ainsi, le module d'apprentissage pourra être configuré pour prédire, de préférence zones par zones, des données de répartition prédite sur 1 heure et avec une donnée toutes les 10 minutes de façon à pouvoir suivre l'évolution des données de répartition prédite

Ainsi, le système peut comporter un **dispositif de contrôle d'accès 30,** de préférence associé avec la plateforme analytique. Le dispositif de contrôle d'accès 30 étant apte à contrôler un accès entre différentes zones de l'emplacement géographique, par exemple en cas de risque de mouvement de foule.

Le dispositif de contrôle d'accès 30 peut par exemple être une cloison mobile, un système de fermeture, un voyant ou un dispositif d'affichage indiquant un droit d'accès à une zone ou encore un portique de sécurité pouvant limiter l'accès à une **zone.**

Le dispositif de contrôle d'accès 30 peut également être couplé à des **dispositifs électroniques individuels 40,** se présentant de préférence sous la forme de bracelets électroniques, lesdits dispositifs électroniques individuels comportant un module de stockage individuel de données apte à stocker des données personnelles sur une personne et un module de communication apte à communiquer avec un dispositif de contrôle d'accès.

Le système selon l'invention est alors avantageusement configuré pour prendre en compte des données personnelles des dispositifs électroniques individuels 40 pour activer ou non les dispositifs de contrôle d'accès.

Le système peut également être configuré pour prendre en compte des données communiquée par les dispositifs électroniques individuels 40 pour calculer la donnée de répartition des participants audit rassemblement.

En outre, la plateforme 100 analytique peut comporter **un module de communication 190.** Grace à ce module de communication, la plateforme 100 est apte à communiquer avec la pluralité de capteurs réseau 20 et de dispositifs d'acquisition d'images 10, des dispositifs de contrôle d'accès 30, des dispositifs électroniques individuels 40 ou tout autre dispositif 50 susceptible d'échanger des informations avec la plateforme analytique. Le module de communication 190 est configuré pour recevoir et transmettre des informations à des systèmes distants tels que des capteurs, des tablettes, des téléphones, des ordinateurs ou des serveurs. Le module de communication permet de transmettre les données sur au moins un réseau de communication et peut comprendre une communication filaire ou sans fil. De préférence, la communication est opérée par l'intermédiaire d'un protocole sans fils tel que wifi, 3G, 4G, et/ou Bluetooth. Ces échanges de données peuvent prendre la forme d'envoi et de réception de fichiers, de préférence cryptés et associés à une clé spécifique de receveur. Le module de communication 190 est en outre apte à permettre la communication entre la plateforme 100 et un terminal distant, dont un client. Le client est généralement, tout matériel et/ou logiciel susceptible d'accéder à la plateforme 100 analytique.

En outre, le système selon l'invention peut comporter une ou plusieurs interfaces homme-machine. L'interface homme-machine, au sens de l'invention, correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Les différents modules de la plateforme 100 sont représentés de façon distincte sur la figure 1 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique. En outre, lorsque l'on prête une action à un dispositif ou un module, celle-ci est en fait effectuée par un microprocesseur du dispositif ou module commandé par des codes instructions enregistrés dans une mémoire. De même, si l'on prête une action à une application, celle-ci est en fait effectuée par un microprocesseur du dispositif dans une mémoire duquel les codes instructions correspondant à l'application sont enregistrés. Lorsqu'un dispositif ou module émet ou reçoit un message, ce message est émis ou reçu par une interface de communication.

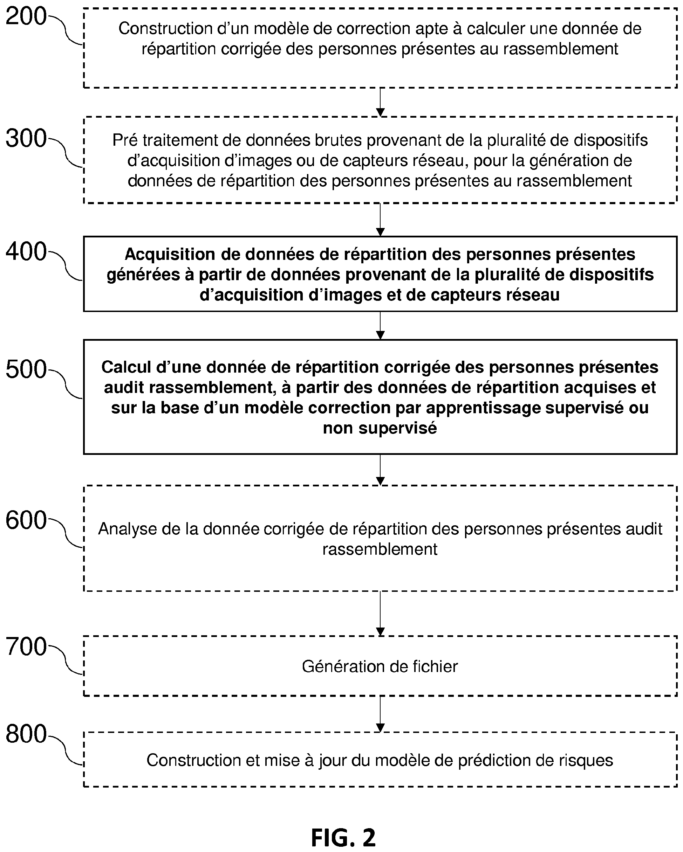

Selon **un autre aspect,** comme représenté à la **figure 2,** l'invention porte sur un **procédé de gestion de rassemblement de masse** sur un emplacement géographique, ledit procédé étant mis en oeuvre par un système comportant une plateforme analytique et, sur l'emplacement géographique, une pluralité de dispositifs d'acquisition d'images et de capteurs réseau, ladite plateforme comportant un module d'acquisition de données et un module de traitement de données, et ledit procédé étant caractérisé en ce qu'il comporte les étapes suivantes :

- Acquisition 400, par le module d'acquisition de données 130, de données de répartition des participants générées à partir de données provenant de la pluralité de dispositifs d'acquisition d'images et de données de répartition des participants générées à partir de données provenant de la pluralité de capteurs réseau ;
- Calcul 500, par le module de traitement de données, d'au moins une donnée de répartition corrigée des participants audit rassemblement, à partir des données de répartition acquises et sur la base d'un modèle d'apprentissage supervisé ou non supervisé.

Le procédé selon l'invention peut comporter une étape préalable 200 de construction d'un modèle de correction apte à calculer une donnée de répartition corrigée des personnes présentes au rassemblement. Une telle étape 200 est illustrée dans la **figure 3.**

De façon particulière, la construction du modèle de correction peut comprendre une étape de chargement 211 de données de répartition générées partir de données provenant de la pluralité de dispositifs d'acquisition d'images 10 ainsi qu'une étape de chargement 212 de données de répartition générée partir de données provenant de la pluralité de capteurs réseau 20.

En outre, la construction du modèle de correction, notamment s'il est basé sur un apprentissage supervisé, peut comprendre une étape 213 de chargement de données réelle de comptages ou bien d'étiquettes pour les données préalablement chargées.

La construction du modèle de correction comporte ensuite une étape 223 de création du modèle puis une étape 230 d'enregistrement de ce modèle.

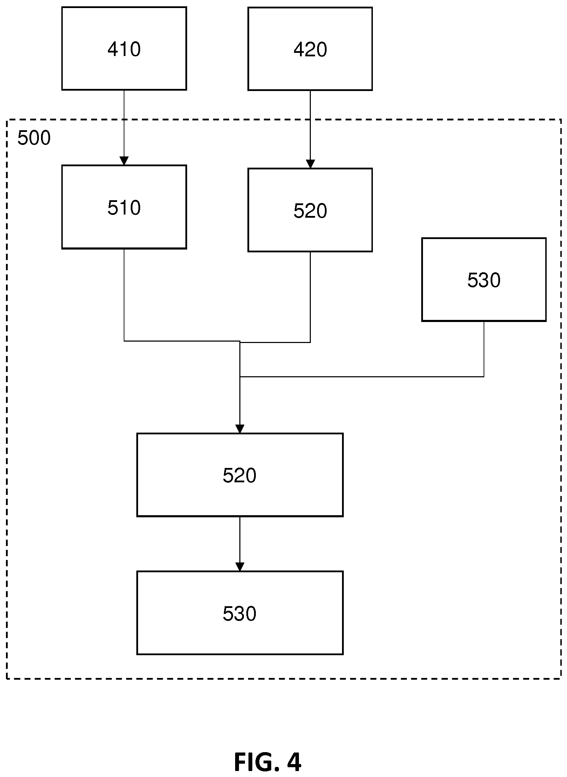

Un mode de réalisation du procédé selon l'invention est représenté dans la **figure 4.**

Le procédé est alors initié par les acquisitions 410 et 420 de données de répartition générées à partir de données provenant respectivement de la pluralité de dispositifs d'acquisition d'images 10 et de la pluralité de capteurs réseau 20.

Ces données sont ensuite chargées en mémoire 510 et 520 par le module de traitement de données 140 qui charge 530 également en mémoire le modèle de correction de façon à pouvoir mettre en œuvre une étape de calcul 520 permettant la génération des données de répartitions corrigées qui pourront ensuite être enregistrée 530.

Comme cela a déjà été évoqué, ces données de répartition corrigées pourront être utilisées par le module de traitement 140 pour interpréter les données de répartition corrigées de façon à calculer et fournir des informations à haute valeur ajoutée pour les administrateurs de l'évènement de masse. Ainsi, le procédé selon l'invention peut comporter une étape 600 d'analyse de la donnée corrigée de répartition des personnes présentes audit rassemblement.

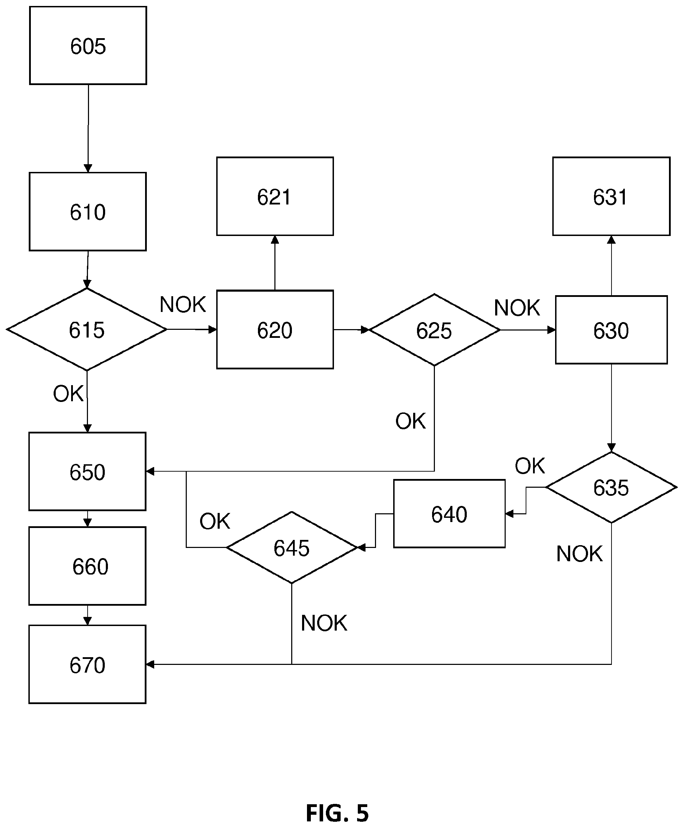

La figure 5 présente un mode de réalisation particulier d'une telle étape d'analyse qui débute par une étape de chargement 605 de données de répartitions corrigées puis une étape de chargement 610 de seuils critiques prédéterminés de répartition. Ces seuils critiques de répartition peuvent être prédéterminés et intégrés dans la plateforme analytique par un administrateur via une interface homme machine. Les seuils critiques de répartition peuvent être également calculés via un modèle d'apprentissage. Les seuils critiques de répartition pourront être différents en fonction des zones considérées. Par exemple si les seuils critiques de répartition sont exprimés en densité (participant/m²) alors une zone pourra présenter un seuil critique de répartition de 3,5 personnes/m² alors qu'un autre site présentera un seuil critique de répartition de 2,3 personnes /m².

Lors d'une étape 615, il est déterminé si un ou plusieurs seuils ont été dépassés par les données de répartition corrigée en cours d'analyse. Si tel est le cas (OK), le procédé initie une étape 650 de génération d'une alerte ainsi qu'éventuellement l'envoi d'instructions à des dispositifs électronique 50 connectés à la plateforme analytique 100, par exemple des dispositifs de contrôle d'accès 30 ou des bracelets personnels 40. Ces alertes ou actions peuvent ensuite faire l'objet d'un enregistrement 670.

Si aucun seuil critique prédéterminé de répartition n'est dépassé (NOK) alors le procédé peut comporter une étape 620 de génération des données de répartition prédites, en fonction du temps, de participants audit rassemblement. Cette étape peut être réalisée à l'aide d'un modèle de prédiction de répartition de participant. Par exemple, à partir des données de répartition corrigées actuelles la plateforme analytique est configurée pour calculer des données de répartition prédites pour les prochaines heures et les enregistrer 621. Lors d'une étape 625, il est déterminé si les données de répartition prédites pourront dépasser un ou plusieurs seuils. Si tel est le cas (OK), le procédé initie les étapes d'alerte 650, d'instructions 660 et d'enregistrement 670.

Si aucune tendance critique n'est identifiée lors de l'étape 625 (NOK) alors le procédé peut comporter une étape 630 de calcul d'un motif de répartition des participants audit rassemblement et une étape d'enregistrement 631 de ce motif. Cette étape peut se baser sur des motifs critiques de répartition, générés par le module d'apprentissage. Ces motifs critiques de répartition, de préférence relatifs à différentes zones, correspondent par exemple à des combinaisons de données de répartition qui malgré qu'aucune ne dépasse des seuils critique de répartition, la combinaison de ces valeurs entraine un risque plus élevé de mouvement de foule. Par exemple, un flux de personne d'une zone A vers une zone B, combinée à un flux de personne d'une zone C vers la zone B et à un volume déjà présent sur la zone B peut correspondre à un fort risque de mouvement de foule. Ainsi, même si aucun seuil critique de répartition n'est dépassé, certaines combinaisons de valeurs de données de répartition entre différentes zones peuvent être associées à de futurs risques.

Lors d'une étape 635, il est déterminé si le motif de répartition correspond à un motif critique. S'il ne correspond pas (NOK) alors le motif généré est enregistré 670. S'il y a correspondance (OK), le procédé peut initier une étape de d'extraction d'une portion d'images provenant des dispositifs d'acquisition d'image 10 et à la transmettre à un module de supervision 170. Cela peut être nécessaire pour valider ou non le risque ou la survenue d'un mouvement de foule ou de tout autre incident. Si lors d'une étape 645, la plateforme reçoit une instruction de validation de risque alors le procédé initie les étapes d'alerte 650, d'instructions 660 et d'enregistrement 670. Sinon il y a un enregistrement des données générées et notamment du motif généré.

Comme présenté en **figure 2,** le procédé selon l'invention peut également comprendre une étape de génération 700 de fichier comportant de préférence les données générées par le module d'analyse.

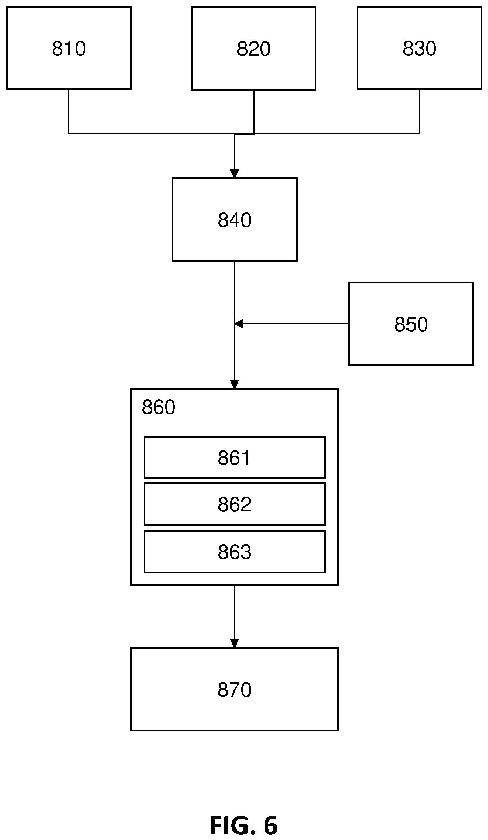

Comme cela a été évoqué, le module d'apprentissage 110 peut également être utilisé pour générer ou modifier un ou plusieurs seuils critiques de répartition. En outre, comme présenté à la figure 1 et illustré à la **figure 6,** le procédé selon l'invention peut comporter une étape 800 de construction et de mise à jour d'un modèle de prédiction de risques.

L'étape 810 correspond au chargement de données de répartition corrigée et mémorisées qui ont été de préférences historisée par le module de mémorisation 150 et l'étape 820 correspond au chargement des données d'alertes mémorisées, que cela soit des alertes générées par le système ou bien des alertes extérieures.

Le procédé peut également comporter une étape 830 correspondant au chargement de données tierces telles que par exemple des données d'occupation d'hôtels, de nombre de visa délivrés, de données relatives aux accès des moyens de transports (aéroports, centrale de bus...). L'étape 840 correspond à une étape avantageuse de découpage des données par périodes. En effet, en fonction des périodes de l'année, les comportements des personnes au rassemblement de masse pourront être différents.

L'étape 850 correspond au chargement des données du modèle de prédiction antérieur si l'étape correspond à une mise à jour du modèle.

Lors d'une étape 860, le module d'apprentissage mettra en œuvre un apprentissage supervisé ou non supervisé pour construire un modèle de prédiction capable notamment de déterminer des seuils critiques de répartition 861, des données de répartition prédites en fonction du temps 862 et/ou des motifs critiques de répartition 863. L'étape 870 correspond à l'enregistrement du nouveau modèle.

Ainsi, le système et le procédé selon l'invention permette de proposer une donnée de répartition corrigée bien plus précise que les données de répartition pouvant être estimées par des procédé de l'art antérieur. En outre, sur la base de cette donnée de répartition corrigée, le système ou le procédé selon l'invention peut réaliser des actions à forte valeur ajoutée pour des organisateurs de rassemblement de masse tels que par exemple : générer une alerte en cas de mouvement de foules à risque ou en cas de dépassement de seuils, identifier une zone à probabilité élevée de risque en réponse à la réception d'une alerte individuelle par exemple via GSM ou bracelet, proposer des voies optimales pour l'évacuation de personnes ou pour l'acheminement de soins (si alerte individuelle par exemple via GSM ou bracelet), quantifier des besoins en entretiens et des temps de travail ou encore planification des visites en fonction de la foule telle que quantifiée.

En outre, dans le cadre de cette invention il est possible de fournir une meilleure quantification de la foule pouvant ensuite être visualisée via des représentations graphiques présentant la densité de personnes telles que des représentations graphiques de type « heatmap » (terminologie anglosaxonne).

**Revendications**

1. Système (1) de gestion de rassemblement de masse sur un emplacement géographique, ledit système comportant une plateforme analytique (100) associée à une pluralité de dispositifs d'acquisition (10) d'images et de capteurs réseau (20) répartis sur l'emplacement géographique de rassemblement, la plateforme analytique (100) comporte un module d'acquisition (130) de données, apte à acquérir des données de répartition des participants générées à partir de données provenant de la pluralité de dispositifs d'acquisition d'images (10) et à acquérir des données de répartition des participants générées à partir de données provenant de la pluralité de capteurs réseau (20), **caractérisé en ce que** :

le module d'acquisition (130) de données comporte un module de traitement (140) de données apte, à partir des données de répartition acquises, à calculer sur la base d'un modèle de correction par apprentissage supervisé ou non supervisé, une donnée de répartition corrigée des participants audit rassemblement,
le système comporte en outre un module de prétraitement (120) configuré pour générer, à partir de données brutes provenant de la pluralité de capteurs réseau, des données de répartition des participants,
la plateforme analytique (100) comporte en outre un module d'apprentissage (110) apte à mettre en œuvre un modèle d'apprentissage supervisé ou non supervisé de façon à :

◦ améliorer le modèle de correction utilisé pour le calcul des données de répartition corrigées,
◦ améliorer le ou les modèles de prétraitement utilisé pour la génération de données de répartition à partir des données brutes de dispositifs d'acquisition d'image ou des capteurs réseau, et
◦ analyser les données de répartition corrigées

2. Système selon la revendication 1, **caractérisé en ce que** les capteurs réseau (20) sont aptes à se connecter à des dispositifs électroniques via au moins un protocole de communication sélectionné parmi : Wifi, Bluetooth et GSM.

3. Système selon l'une des revendications 1 ou 2, **caractérisé en ce que** le modèle de correction est sélectionné parmi les modèles suivants : FP-Growth, Apriori, partitionnement hiérarchique, partitionnement en k-moyenne, classification par réseaux de neurones, arbres de décision et régression logique.

4. Système selon l'une quelconque des revendications 1 à 3, **caractérisé en ce que** la plateforme analytique (100) comporte un module de mémorisation (150) de données apte à enregistrer les données de répartition acquises et les données de répartition corrigées.

5. Système selon la revendication 4, **caractérisé en ce que** le module d'apprentissage (110) est configuré pour analyser les données de répartition corrigées de façon à générer des données prédictives sélectionnées parmi :

◦ des seuils critiques de répartition, de préférence par zone, au-delà desquels des actions pourront être engagées de façon à réduire le risque de mouvement de foule,
◦ des données de répartition prédites, en fonction du temps, de participants audit rassemblement,
◦ des motifs critiques de répartition, de préférence entre différentes zones, en présence desquels des actions pourront être engagées de façon à réduire le risque de mouvement de foule.

6. Système selon l'une quelconque des revendications 1 à 5, **caractérisé en ce que** la plateforme analytique (100) comporte un module d'analyse (160) apte à comparer, de préférence en temps réel, les données de répartition corrigée sur ledit emplacement géographique de rassemblement à des seuils critiques prédéterminés de répartition et à générer une alerte en fonction du résultat de la comparaison.

7. Système selon l'une quelconque des revendications 1 à 6, **caractérisé en ce que** le module de traitement (140) de données est apte à générer des données de répartition sélectionnées parmi :

- la quantité totale de participants sur l'emplacement géographique ou sur une partie de l'emplacement géographique,
- la densité de participants sur l'emplacement géographique ou sur une partie de l'emplacement géographique, et
- le nombre de personnes entrées et sorties de l'emplacement géographique ou d'une partie de l'emplacement géographique.

8. Système selon l'une quelconque des revendications 1 à 7, **caractérisé en ce que** le système comporte en outre au moins un dispositif de contrôle d'accès (30) configuré pour contrôler les accès entre différentes zones de l'emplacement géographique.

9. Système selon la revendication 8, **caractérisé en ce que** le dispositif de contrôle d'entrée (30) est couplé avec des dispositifs électroniques individuels (40), se présentant de préférence sous la forme de bracelets électroniques, lesdits dispositifs électroniques individuels comportant un module de stockage individuel de données apte à stocker des données personnelles sur une personne et un module de communication apte à communiquer avec un dispositif de contrôle d'accès.

10. Système selon l'une quelconque des revendications 1 à 9, **caractérisé en ce que** le système comporte en outre un module de communication (190) configuré pour recevoir et transmettre des informations à des systèmes distants tels que des capteurs, des tablettes, des téléphones, des ordinateurs ou des serveurs.

11. Système selon l'une quelconque des revendications 1 à 10, **caractérisé en ce que** le système comprend en outre un module de supervision (170) configuré pour afficher au moins une information sur les données de répartitions réelles ou prédites des participants au rassemblement de masse.

12. Système selon l'une quelconque des revendications 1 à 11, **caractérisé en ce que** le système comporte ou est associé à, entre 10 et 2000 capteurs réseau (20), la pluralité de capteurs réseau (20) correspondant à une densité de capteurs réseau (20) comprise entre 1 et 10 par 10 000 m$^2$.

13. Procédé de gestion de rassemblement de masse sur un emplacement géographique, ledit procédé étant mis en œuvre par un système comportant une plateforme analytique (100) et, sur l'emplacement géographique, une pluralité de dispositifs d'acquisition d'images et de capteurs réseau, ladite plateforme comportant module d'acquisition de données et un module de traitement de données, et ledit procédé comporte une étape d'acquisition (400), par le module d'acquisition (130) de données, de données de répartition des participants générées à partir de données provenant de la pluralité de dispositifs d'acquisition d'images (10) et de données de répartition des participants générées à partir de données provenant de la pluralité de capteurs réseau (20) ; **caractérisé en ce que**,

le procédé comporte une étape de calcul (500), par le module de traitement (140) de données, d'au moins une donnée de répartition corrigée des participants audit rassemblement, à partir des données de répartition acquises et sur la base d'un modèle d'apprentissage supervisé ou non supervisé,

le système comporte en outre un module de prétraitement (120) configuré pour générer, à partir de données brutes provenant de la pluralité de capteurs réseau, des données de répartition des participants,

la plateforme analytique (100) comporte en outre un module d'apprentissage (110) apte à mettre en œuvre un modèle d'apprentissage supervisé ou non supervisé de façon à :

○ améliorer le modèle de correction utilisé pour le calcul des données de répartition corrigées,
○ améliorer le ou les modèles de prétraitement utilisé pour la génération de données de répartition à partir des données brutes de dispositifs d'acquisition d'image ou des capteurs réseau, et

analyser les données de répartition corrigée.

**Patentansprüche**

1. System (1) zum Verwalten einer Massenversammlung an einem geografischen Ort, wobei das System eine analytische Plattform (100) aufweist, die mit einer Vielzahl von Bilderfassungsvorrichtungen (10) und Netzwerksensoren (20), die über den geografischen Versammlungsort verteilt sind, verknüpft ist, wobei die analytische Plattform (100) ein Datenerfassungsmodul (130) aufweist, das geeignet ist, um Teilnehmerverteilungsdaten zu erfassen, die aus Daten erzeugt werden, die von der Vielzahl von Bilderfassungsvorrichtungen (10) stammen, und um Teilnehmerverteilungsdaten zu erfassen, die aus Daten erzeugt werden, die von der Vielzahl von Netzwerksensoren (20) stammen, **dadurch gekennzeichnet, dass**:

das Datenerfassungsmodul (130) ein Datenverarbeitungsmodul (140) aufweist, das geeignet ist, um aus den erfassten Verteilungsdaten auf der Basis eines überwachten oder nicht überwachten Lernkorrekturmodells ein korrigiertes Verteilungsdatenelement der Teilnehmer an der Versammlung zu berechnen, das System ferner ein Vorverarbeitungsmodul (120) aufweist, das zum Erzeugen aus Rohdaten, die von der Vielzahl von Netzwerksensoren stammen, von Teilnehmerverteilungsdaten konfiguriert ist, die analytische Plattform (100) ferner ein Lernmodul (110) aufweist, das geeignet ist, um ein überwachtes oder unüberwachtes Lernmodell zu implementieren zum:

○ Verbessern des Korrekturmodells, das für die Berechnung der korrigierten Verteilungsdaten verwendet wird,
○ Verbessern des oder der Vorverarbeitungsmodelle für die Erzeugung von Verteilungsdaten aus Rohdaten von Bilderfassungsvorrichtungen oder Netzwerksensoren, und
○ Analysieren der korrigierten Verteilungsdaten.

2. System nach Anspruch 1, **dadurch gekennzeichnet, dass** die Netzwerksensoren (20) geeignet sind, um sich über mindestens ein Kommunikationsprotokoll zu verbinden, das ausgewählt ist aus: WLAN, Bluetooth und GSM.

3. System nach einem der Ansprüche 1 oder 2, **dadurch gekennzeichnet, dass** das Korrekturmodell aus den folgenden Modellen ausgewählt ist: FP-Wachstum, Apriori, hierarchischer Partitionierung, k-Means-Partitionierung, Klassifizierung durch neuronale Netzwerke, Entscheidungsbäumen und logischer Regression.

4. System nach einem der Ansprüche 1 bis 3, **dadurch gekennzeichnet, dass** die analytische Plattform (100) ein Datenspeichermodul (150) aufweist, das geeignet ist, um die erfassten Verteilungsdaten und die korrigierten Verteilungsdaten aufzuzeichnen.

5. System nach Anspruch 4, **dadurch gekennzeichnet, dass** das Lernmodul (110) zum Analysieren der korrigierten Verteilungsdaten konfiguriert ist, um prognostizierte Daten zu erzeugen, die ausgewählt sind aus:

○ kritischen Verteilungsschwellenwerte, vorzugsweise nach Zone, ab denen Maßnahmen ergriffen werden können, um das Risiko von Massenpanik zu verringern,
○ prognostizierten Verteilungsdaten der Teilnehmer an der Versammlung in Abhängigkeit von der Zeit,
○ kritischen Verteilungsmustern, vorzugsweise zwischen verschiedenen Zonen, bei deren Vorhandensein Maßnahmen ergriffen werden können, um das Risiko von Massenpanik zu verringern.

6. System nach einem der Ansprüche 1 bis 5, **dadurch gekennzeichnet, dass** die analytische Plattform (100) ein Analysemodul (160) aufweist, das geeignet ist, um die korrigierten Verteilungsdaten an dem geografischen Versammlungsort vorzugsweise in Echtzeit mit vorgegebenen kritischen Verteilungsschwellenwerten zu vergleichen und um basierend auf dem Ergebnis des Vergleichs eine Warnung zu erzeugen.

7. System nach einem der Ansprüche 1 bis 6, **dadurch gekennzeichnet, dass** das Datenverarbeitungsmodul (140) geeignet ist, um Verteilungsdaten zu erzeugen, die ausgewählt sind aus:

- der Gesamtzahl von Teilnehmern an dem geografischen Ort oder an einem Teil des geografischen Orts,
- der Teilnehmerdichte an dem geografischen Ort oder an einem Teil des geografischen Orts, und
- der Anzahl von Personen, die den geografischen Ort oder einen Teil des geografischen Orts betreten und verlassen.

8. System nach einem der Ansprüche 1 bis 7, **dadurch gekennzeichnet, dass** das System ferner mindestens eine Zugangskontrollvorrichtung (30) aufweist, die zum Kontrollieren des Zugangs zwischen verschiedenen Zonen des geografischen Orts konfiguriert ist.

9. System nach Anspruch 8, **dadurch gekennzeichnet, dass** die Zugangskontrollvorrichtung (30) mit individuellen elektronischen Vorrichtungen (40) gekoppelt ist, die vorzugsweise in der Form von elektronischen Armbändern vorliegen, wobei die individuellen elektronischen Vorrichtungen ein individuelles Datenspeichermodul, das geeignet ist, um persönliche Daten über eine Person zu speichern, und ein Kommunikationsmodul, das geeignet ist, um mit einer Zugangskontrollvorrichtung zu kommunizieren, aufweisen.

10. System nach einem der Ansprüche 1 bis 9, **dadurch gekennzeichnet, dass** das System ferner ein Kommunikationsmodul (190) aufweist, das zum Empfangen und Übertragen von Informationen an entfernte Systeme wie Sensoren, Tablets, Telefone, Computer oder Server konfiguriert ist.

11. System nach einem der Ansprüche 1 bis 10, **dadurch gekennzeichnet, dass** das System ferner ein Überwachungsmodul (170) aufweist, das zum Anzeigen mindestens einer Information über die echten oder prognostizierten Verteilungsdaten der Teilnehmer an der Massenversammlung konfiguriert ist.

12. System nach einem der Ansprüche 1 bis 11, **dadurch gekennzeichnet, dass** das System zwischen 10 bis 2000 Netzwerksensoren (20) aufweist oder mit diesen verknüpft ist, wobei die Vielzahl von Netzwerksensoren (20) einer Dichte von Netzwerksensoren (20) von 1 bis 10 pro 10.000 m² entspricht.

13. Verfahren zum Verwalten der Massenversammlung an einem geografischen Ort, wobei das Verfahren durch ein System implementiert wird, das eine analytische Plattform (100) und an dem geografischen Ort eine Vielzahl von Bilderfassungsvorrichtungen und Netzwerksensoren aufweist, wobei die Plattform ein Datenerfassungsmodul und ein Datenverarbeitungsmodul aufweist, und das Verfahren einen Schritt (400) zum Erfassen, durch das Datenerfassungsmodul (130), von Teilnehmerverteilungsdaten, die aus Daten erzeugt werden, die von der Vielzahl von Bilderfassungsvorrichtungen (10) stammen, und von Teilnehmerverteilungsdaten aufweist, die aus Daten erzeugt werden, die von der Vielzahl von Netzwerksensoren (20) stammen; **dadurch gekennzeichnet, dass** das Verfahren ferner einen Schritt zum Berechnen (500), durch das Datenverarbeitungsmodul (140), mindestens eines korrigierten Verteilungsdatenelements der Teilnehmer an der Versammlung aus den erfassten Verteilungsdaten und auf der Basis eines überwachten oder unüberwachten Lernmodells aufweist,

das System ferner ein Vorverarbeitungsmodul (120) aufweist, das zum Erzeugen aus Rohdaten, die von der Vielzahl von Netzwerksensoren stammen, von Teilnehmerverteilungsdaten konfiguriert ist,
die analytische Plattform (100) ferner ein Lernmodul (110) aufweist, das geeignet ist, um ein überwachtes oder unüberwachtes Lernmodell zu implementieren zum:

○ Verbessern des Korrekturmodells, das für die Berechnung der korrigierten Verteilungsdaten verwendet wird,
○ Verbessern des oder der Vorverarbeitungsmodelle für die Erzeugung von Verteilungsdaten aus Rohdaten von Bilderfassungsvorrichtungen oder Netzwerksensoren, und
○ Analysieren der korrigierten Verteilungsdaten.

**Claims**

1. System (1) for managing a mass gathering on a geographical location, said system comprising an analytical platform (100) associated with a plurality of image acquisition devices (10) and network sensors (20) distributed over the geographical location, the analytical platform (100) comprises a data acquisition module (130), adapted to acquire participant distribution data generated from data from the plurality of image acquisition devices (10) and to acquire participant distribution data generated from data from the plurality of network sensors (20); **characterized in that** :

the data acquisition module (130) comprises a data processing module (140) adapted, from the acquired distribution data, to calculate based on a supervised or unsupervised learning correction model, a corrected distribution data item of participants in said gathering; and
the system further comprises a pre-processing module (120) configured to generate, from raw data from the plurality of network sensors, participant distribution data,
the analytical platform (100) further comprises a learning module (110) adapted to implement a supervised or unsupervised learning model so as to:

- improve the correction model used for calculating the corrected distribution data,
- improve one or more pre-processing models used for generating distribution data from raw data from said image acquisition devices or said network sensors, and
- analyze the corrected distribution data.

2. System according to claim 1, **characterized in that** the network sensors (20) are able to connect to electronic devices via at least one communication protocol selected from: Wi-Fi, Bluetooth and GSM.

3. System according to one of claim 1 or 2, **characterized in that** the correction model is selected from the following models: FP-Growth, Apriori, hierarchical clustering, k-means clustering, neural network classification, decision trees and logistic regression.

4. System according to any one of claims 1 to 3, **characterized in that** the analytical platform (100) includes a data storage module (150) adapted to store the acquired distribution data and the corrected distribution data.

5. System according to claim 4, **characterized in that** the learning module (110) is configured to analyze the corrected distribution data so as to generate predictive data selected from:

- critical distribution thresholds, preferably by area, beyond which actions may be initiated so as to reduce a risk of a crowd movement,
- predicted distribution data, as a function of time, of participants in said gathering, and
- critical distribution patterns, preferably between different areas, in the presence of which actions may be taken to reduce a risk of a crowd movement.

**6.** System according to any one of claims 1 to 5, **characterized in that** the analytical platform (100) comprises an analysis module (160) adapted to compare, preferably in real time, the corrected distribution data on said geographical location to predetermined critical distribution thresholds and to generate an alert based on the comparison result.

**7.** System according to any one of claims 1 to 6, **characterized in that** the data processing module (140) is able to generate further distribution data selected from:

   - a total amount of participants on the geographical location or on part of the geographical location,
   - a density of participants on the geographical location or on part of the geographical location, and
   - a number of people entering and leaving the geographical location or part of the geographical location.

**8.** System according to any one of claims 1 to 7, **characterized in that** the system further comprises at least one access control device (30) configured to control access between different areas of the geographical location.

**9.** System according to claim 8, **characterized in that** the access control device (30) is coupled with individual electronic devices (40), preferably in the form of electronic bracelets, said individual electronic devices comprising an individual data storage module capable of storing personal data on a person and a communication module capable of communicating with an access control device.

**10.** System according to any one of claims 1 to 9, **characterized in that** the system further comprises a communication module (190) configured to receive and transmit information to remote systems such as sensors, tablets, telephones, computers or servers.

**11.** System according to any one of claims 1 to 10, **characterized in that** the system further comprises a supervision module (170) configured to display at least one item of information on the actual or predicted distribution data of the participants in the mass gathering.

**12.** System according to any one of claims 1 to 11, **characterized in that** the system comprises or is associated with, between 10 and 2000 network sensors (20), the plurality of network sensors (20) corresponding to a density of network sensors (20) of between 1 and 10 per 10000 $m^2$.

**13.** A method for managing a mass gathering on a geographical location, said method being implemented by a system comprising an analytical platform (100) and, on the geographical location, a plurality of image acquisition devices and network sensors, said platform comprising a data acquisition module and a data processing module,

and said method comprises a step of acquisition (400), by the data acquisition module (130), of participant distribution data generated from data coming from the plurality of image acquisition devices (10) and of participant distribution data generated from data coming from the plurality of network sensors (20)
**characterized in that**,
the method comprises a step of calculating (500), by the data processing module (140), at least one corrected distribution data of the participants in said gathering, from the acquired distribution data and on the basis of a supervised or unsupervised learning model,
the system further comprises a pre-processing module (120) configured to generate, from raw data originating from the plurality of network sensors, participant distribution data,
the analytical platform (100) further comprises a learning module (110) capable of implementing a supervised or unsupervised learning model so as to:

   - improve the correction model used for calculating the corrected distribution data,
   - improve the preprocessing model(s) used for generating distribution data from raw data from image acquisition devices or network sensors, and

analyze the corrected distribution data

**FIG. 1**

200 — Construction d'un modèle de correction apte à calculer une donnée de répartition corrigée des personnes présentes au rassemblement

300 — Pré traitement de données brutes provenant de la pluralité de dispositifs d'acquisition d'images ou de capteurs réseau, pour la génération de données de répartition des personnes présentes au rassemblement

400 — **Acquisition de données de répartition des personnes présentes générées à partir de données provenant de la pluralité de dispositifs d'acquisition d'images et de capteurs réseau**

500 — **Calcul d'une donnée de répartition corrigée des personnes présentes audit rassemblement, à partir des données de répartition acquises et sur la base d'un modèle correction par apprentissage supervisé ou non supervisé**

600 — Analyse de la donnée corrigée de répartition des personnes présentes audit rassemblement

700 — Génération de fichier

800 — Construction et mise à jour du modèle de prédiction de risques

**FIG. 2**

**FIG. 3**

**FIG. 4**

**FIG. 5**

**FIG. 6**

## RÉFÉRENCES CITÉES DANS LA DESCRIPTION

**Documents brevets cités dans la description**

- WO 2017021853 A
- US 20110080262 A
- US 20020126013 A